# EUROPÄISCHE PATENTANMELDUNG

(11) **EP 3 125 408 A1**
(43) Veröffentlichungstag der Anmeldung: **01.02.2017**
(21) Anmeldenummer: 15179119.1
(22) Anmeldetag: 30.07.2015
(51) Int. Cl.: H02K 5/15, H02K 5/173

(54) **ROTIERENDE MASCHINE MIT EINER VERBINDUNGSVORRICHTUNG AN GEHÄUSEABSCHNITTEN, SOWIE DEREN VERWENDUNG FÜR DIESE**

(71) Anmelder: Siemens Aktiengesellschaft, 80333 München (DE)
(72) Erfinder: Pannier, Lars, 97618 Rödelmaier (DE)

(57) **Zusammenfassung**

Die Erfindung betrifft eine rotierende Maschine (10, 110, 210), umfassend Gehäuseabschnitte (14, 15, 114, 115, 214, 215, 209) und eine Welle (16, 116), wobei die Gehäuseabschnitte (14, 15, 114, 115, 214, 215, 209) einen Innenraum (11) der rotierenden Maschine (10, 110, 210) umgeben und den Innenraum (11) gegenüber einer Umgebung (4) außerhalb der rotierenden Maschine (10, 110, 210) festlegen, wobei ein erster Gehäuseabschnitt (14, 114, 214) der Gehäuseabschnitte (14, 15, 114, 115, 214, 215, 209) ein Lagerschild (14, 114, 214) mit einer ersten Lagerungseinheit (17) ist, wobei die Welle (16, 116) mit einer ersten Lagerungsvorrichtung (22) in der ersten Lagerungseinheit (17) des Lagerschilds (14, 114, 214) und mit einer zweiten Lagerungsvorrichtung (23) in einer zweiten Lagerungseinheit (18, 118) eines weiteren Gehäuseabschnitts (15, 209) um eine sich in einer axialen Richtung (7) erstreckenden Drehachse(4) drehbar gelagert ist, wobei das Lagerschild (14, 114, 214) durch eine Befestigungsvorrichtung (19, 119, 219) der rotierenden Maschine (10, 110, 210) an einem zweiten Gehäuseabschnitt (15, 115, 215) befestigt ist, wobei die Befestigungsvorrichtung (19, 119, 219) eine Verbindungsvorrichtung (21, 121, 221) aufweist, wobei das Lagerschild (14, 114, 214) durch die Verbindungsvorrichtung (21, 121, 221) gegen den zweiten Gehäuseabschnitt (15, 115, 215) mit einer axial wirkenden Presskraft (12, 112) gepresst ist, wobei die Verbindungsvorrichtung (21, 121, 221) einen Metallquerschnitt zum Ausüben der axialen Presskraft (12, 112) zwischen dem Lagerschild (14, 114, 214) und dem zweiten Gehäuseabschnitt (15, 115, 215) aufweist, wobei die Verbindungsvorrichtung (21, 121, 221) eine schnappende Verbindungsvorrichtung (21, 121, 221) mit einer schnappenden Verbindungseinheit (31, 131, 231) ist, sowie eine Verwendung eines Gehäuseabschnitts (14, 15, 114, 115, 214, 215, 209) für diese.

## Beschreibung

Die Erfindung betrifft eine rotierende Maschine gemäß dem Oberbegriff des Anspruch 1, sowie eine Verwendung eines Gehäuseabschnitts für die rotierende Maschine.

Eine derartige Maschine ist beispielsweise als elektrische Maschine aus der Broschüre "Dynamisch und Präzise - SIMOTICS" der Siemens AG bekannt. Die dort beschriebenen elektrischen Maschinen werden im industriellen Breiteneinsatz, z. B. Industrieanlagen, eingesetzt. Einzelne Komponenten der dort beschriebenen elektrischen Maschinen wie Lagerschilde, Blechpakete und Gehäuse sowie diverse Motoranbauten oder Maschinenanbauten werden mit Schrauben miteinander verbunden, um höchste Qualität und Zuverlässigkeit im industriellen Breiteneinsatz zu gewährleisten.

Daneben sind auch für andere Einsatzzwecke elektrische Maschinen bekannt. Beispielsweise betrifft die DE 10 2007 039 550 A1 einen Elektromotor, insbesondere für ein Elektrohandwerkzeuggerät, die EP 0 305 915 B1 einen Elektromotor geringer Leistung, die FR 2 723 491 A1 eine rotierende Maschine mit einem äußerem Lager, die GB 1 297 329 die Konstruktion kleiner elektrischer Motoren, insbesondere, aber nicht exklusiv zur Verwendung in batteriebetriebenen Spielzeugen, die Patentschrift DE 1 224 399 einen Gleichstrommotor mit einem beidseitig in je einem Lagerschild gelagerten Anker und die EP 0 168 744 B1 ein Lagerschild für Gleichstrom-Kleinstmotoren. Die in diesen Veröffentlichungen verwendeten Motorkonstruktionen weisen Lagerschilde aus Kunststoff oder glasfaserverstärkten Kunststoff mit schnappenden Verbindungseinheiten in einem Stück aus dem Kunststoff oder glasfaserverstärkten Kunststoff bestehend hergestellt auf.

Der Erfindung liegt die Aufgabe zu Grunde, einen technischen Beitrag zu einer rotierenden Maschine, insbesondere rotierenden elektrischen Maschine, gemäß dem Oberbegriff des Patentanspruchs 1 zu leisten, mit dem die rotierende Maschine, insbesondere die elektrische Maschine, kostengünstig und in hoher Qualität zur Verfügung gestellt werden kann.

Die Aufgabe wird durch eine rotierende Maschine mit den Merkmalen des Anspruchs 1 gelöst.

Eine erfindungsgemäße rotierende Maschine umfasst Gehäuseabschnitte und eine Welle,
- wobei die Gehäuseabschnitte einen Innenraum der rotierenden Maschine umgeben und den Innenraum gegenüber einer Umgebung außerhalb der rotierenden Maschine festlegen,
- wobei ein erster Gehäuseabschnitt der Gehäuseabschnitte ein Lagerschild mit einer ersten Lagerungseinheit ist,
- wobei die Welle mit einer ersten Lagerungsvorrichtung in der ersten Lagerungseinheit des Lagerschilds und mit einer zweiten Lagerungsvorrichtung in einer zweiten Lagerungseinheit eines weiteren Gehäuseabschnitts um eine sich in einer axialen Richtung erstreckende Drehachse drehbar gelagert ist,
- wobei das Lagerschild durch eine Befestigungsvorrichtung der rotierenden Maschine an einem zweiten Gehäuseabschnitt befestigt ist,
- wobei die Befestigungsvorrichtung eine Verbindungsvorrichtung aufweist,
- wobei das Lagerschild durch die Verbindungsvorrichtung gegen den zweiten Gehäuseabschnitt mit einer axial wirkenden Presskraft gepresst ist,
- wobei die Verbindungsvorrichtung einen Metallquerschnitt zum Ausüben der axialen Presskraft zwischen dem Lagerschild und dem zweiten Gehäuseabschnitt aufweist,
- wobei die Verbindungsvorrichtung eine schnappende Verbindungsvorrichtung mit einer schnappenden Verbindungseinheit ist.

Die Aufgabe wird auch durch eine Verwendung eines Gehäuseabschnitts nach Anspruch 15 gelöst.

Bei einer erfindungsgemäßen Verwendung eines Gehäuseabschnitts für eine erfindungsgemäße rotierende Maschine, die die Befestigungsvorrichtung mit der Verbindungsvorrichtung aufweist, wobei das Lagerschild durch die Befestigungsvorrichtung an dem zweiten Gehäuseabschnitt befestigt ist, wobei die Verbindungsvorrichtung den Metallquerschnitt zum Ausüben der axialen Presskraft zwischen dem Lagerschild und dem zweiten Gehäuseabschnitt aufweist, wird der Gehäuseabschnitt als Lagerschild oder als zweiter Gehäuseabschnitt für die schnappende Verbindungsvorrichtung der rotierenden Maschine verwendet, wobei die schnappende Verbindungsvorrichtung mit der schnappenden Verbindungseinheit die Verbindungsvorrichtung der rotierenden Maschine ist

Die Aufgabe wird erfindungsgemäß vorteilhaft gelöst, indem durch die schnappende Verbindungsvorrichtung mit dem Metallquerschnitt zwischen dem Lagerschild und dem zweiten Gehäuseabschnitt vorteilhaft kostengünstig eine rotierende Maschine gemäß dem Oberbegriff des Patentanspruchs 1 in einer hohen Qualität, insbesondere für den industriellen Breiteneinsatz, zur Verfügung gestellt werden kann. Vorteilhaft kostengünstig können in einer hohen Qualität bewährte Prinzipien rotierender Maschinen gemäß dem Oberbegriff des Patentanspruchs 1, insbesondere im industriellen Breiteneinsatz, vorteilhaft beibehalten werden.

Vorteilhaft ist z. B. zum Ausüben der axialen Presskraft zwischen dem Lagerschild und dem zweiten Gehäuseabschnitt weiterhin ein Verbindungselement vorhanden, das wie bei üblicherweise bei den rotierenden Maschinen gemäß dem Oberbegriff des Patentanspruchs 1 vorhandenen Schraubenverbindungen aus metallischen Werkstoffen den Metallquerschnitt zum Ausüben der axialen Presskraft zwischen dem Lagerschild und dem zweiten Gehäuseabschnitt aufweist. Dabei ist das Verbindungselement vorteilhaft die schnappende Verbindungseinheit.

Radiale Richtungen erstrecken sich ausgehend von der Drehachse in Querschnittsebenen der rotierenden Maschine, wobei die axiale Richtung senkrecht auf den radialen Richtungen steht. Eine tangentiale Richtung verläuft senkrecht zu der axialen Richtung und senkrecht zu einer der radialen Richtungen.

Vorteilhaft können der erste Gehäuseabschnitt und der zweite Gehäuseabschnitt in der axialen Richtung in einer Reihe angeordnet sein.

Bei einem Betrieb einer erfindungsgemäßen rotierenden Maschine wird eine drehbare Komponente in eine Drehung um die Drehachse versetzt und es kann an der Welle, an der die drehbare Komponente befestigt ist, Energie in Form von mechanische Energie an einen mechanischen Verbraucher als Drehmoment abgegeben werden. Die bei der Abgabe der mechanischen Energie auftretenden Kräfte führen zu Gegenkräften in den Gehäuseabschnitten der rotierenden Maschine. Bei diesem Betrieb wird eine andere Energieform, z.B. chemische Energie, Wärmeenergie oder elektrische Energie von einer Umwandlungsvorrichtung in mechanische Energie umgewandelt. Die Umwandlungsvorrichtung weist die drehende Komponente und eine in einem der Gehäuseabschnitte befestigte feststehende Komponente auf.

Bei einem Betrieb einer erfindungsgemäßen rotierenden Maschine kann auch der rotierenden Maschine mechanische Energie über die Welle zugeführt werden, die auch zu entsprechenden Gegenkräften in den Gehäuseabschnitten führen.

Die Welle kann sich zur Übertragung des Drehmoments im Betrieb einer erfindungsgemäßen rotierenden Maschine durch eine Öffnung des Lagerschilds erstrecken. So kann in einem Betrieb vorteilhaft das Drehmoment außerhalb der rotierenden Maschine zur Verfügung gestellt werden.

Eine erfindungsgemäße Verwendung eines Gehäuseabschnitts weist den weiteren Vorteil auf, dass für die Verwendung des Gehäuseabschnitts vorteilhaft keine weiteren Verbindungselemente, wie z. B. Schrauben und Muttern, zur Verfügung gestellt werden müssen, um das Lagerschild an dem zweiten Gehäuseabschnitt der rotierenden Maschine gemäß dem Oberbegriff des Patentanspruchs 1 vorteilhaft kostengünstig in einer hohen Qualität befestigen zu können. So können z. B. die Anbieter von Gehäuseabschnitten für eine rotierende Maschine, insbesondere rotierende elektrische Maschine, gemäß dem Oberbegriff des Patentanspruchs 1 vorteilhaft kostengünstig in einer hohen Qualität die Gehäuseabschnitte anbieten.

Vorteilhafte Ausgestaltungen der Erfindung sind in den abhängigen Ansprüchen angegeben. Es wird hierbei vorteilhaft ein technischer Beitrag zur vorteilhaften Ausgestaltung einer erfindungsgemäßen rotierenden Maschine geleistet, mit dem die rotierende Maschine, insbesondere die elektrische Maschine, kostengünstig in hoher Qualität zur Verfügung gestellt werden kann.

So ist eine Ausgestaltung einer erfindungsgemäßen rotierenden Maschine vorteilhaft, bei der das Lagerschild die schnappende Verbindungseinheit aufweist und die schnappende Verbindungsvorrichtung eine Einrastkontur am zweiten Gehäuseabschnitt aufweist. Es kann die schnappende Verbindungseinheit vorteilhaft an dem Lagerschild angebracht werden, da der zweite Gehäuseabschnitt bei vielen rotierenden Maschinen eine größere Erstreckung in der axialen Richtung aufweist als das Lagerschild und somit die von außen sichtbaren Seitenflächen eines Gehäuses mit den Gehäuseabschnitten bestimmen, die vorteilhaft nicht verändert werden müssen.

Die Einrastkontur kann als eine Innenkontur, insbesondere als umlaufende Ausnehmung, an einer Innenseite des zweiten Gehäuseabschnitts vorhanden sein. Die Innenkontur kann z. B. mit Hilfe eines Gießverfahrens hergestellt werden. Vorteilhaft kann die Innenkontur bei einer für die Montage von Komponenten im zweiten Gehäuseabschnitt notwendigen Nachbearbeitung der Innenseite des zweiten Gehäuseabschnitts vorteilhaft hergestellt sein.

Einer weiteren vorteilhaften Ausgestaltung einer erfindungsgemäßen rotierenden Maschine weist die schnappende Verbindungsvorrichtung eine Einrastkontur am Lagerschild auf und weist der Gehäuseabschnitt die schnappende Verbindungseinheit auf. Das Lagerschild mit der Einrastkontur kann so vorteilhaft ohne räumlich herausragende schnappende Verbindungseinheit vorteilhaft transportiert oder gelagert werden. Vorteilhaft kann die Einrastkontur bei einer Bearbeitung eines Zentrierrands des Lagerschilds mit angebracht werden.

In einer weiteren vorteilhaften Ausgestaltung einer erfindungsgemäßen rotierenden Maschine ist an dem Gehäuseabschnitt mit der schnappenden Verbindungseinheit ein Schnapphaken, insbesondere mit dem Gehäuseabschnitt mit der schnappenden Verbindungseinheit in einem Stück aus einem metallischen Werkstoff bestehend hergestellt, angebracht. Vorteilhaft kann so bei einer Herstellung der elektrischen Maschine eine undefinierte Lage einzelner Elemente der schnappenden Verbindungseinheit vorteilhaft vermieden werden.

Es kann in dem Gehäuseabschnitt mit der Einrastkontur eine Komponente der rotierenden Maschine in einer axialen Position zum zusätzlichen Aufrechterhalten eines eingeschnappten Zustands des Schnapphakens in der Einrastkontur befestigt sein. Vorteilhaft kann so ein Lösen der Befestigung zwischen dem Lagerschild und dem zweiten Gehäuseabschnitt vorteilhaft zusätzlich vermieden werden. Es sind keine weiteren Komponenten notwendig, da die Komponente als feststehender Teil der rotierenden Maschine auch ohne die schnappende Verbindung vorhanden wäre. Die Komponente trägt zusätzlich zum Aufrechterhalten des eingeschnappten Zustands bei, da der Schnapphaken aufgrund seiner Elastizität durch die Verjüngung im Materialquerschnitt und dem metallischen Querschnitt mit einer in radialer Richtung wirkenden hohen Kraft in die Einrastkontur gepresst wird.

Die Komponente kann elastisch deformierbar sein. So kann der Schnapphaken zum Einschnappen in die Einrastkontur die Komponente vorteilhaft elastisch deformieren und anschließend zum Aufrechterhalten des eingeschnappten Zustands vorteilhaft beitragen.

Die Komponente kann die Drehachse entlang der axialen Position des zweiten Gehäuseabschnitts um die Drehachse verlaufend umschließen, wobei der zweite Gehäuseabschnitt der Gehäuseabschnitt mit der Einrastkontur ist. So muss vorteilhaft die Komponente bezüglich einer Winkelposition um die Drehachse nicht ausgerichtet sein, um ein Lösen der Befestigung zwischen dem Lagerschild und dem zweiten Gehäuseabschnitt vorteilhaft zur vermeiden.

Die rotierende Maschine kann eine elektrische Maschine sein und die Komponente kann das Blechpaket eines Stators sein. So kann kostengünstig der Stator zum Aufrechterhalten der Befestigung des Lagerschilds an dem zweiten Gehäuseabschnitt vorteilhaft verwendet werden.

In einer weiteren vorteilhaften Ausgestaltung einer erfindungsgemäßen rotierenden Maschine ist der Schnapphaken über ein Verbindungsstück an dem Gehäuseabschnitt angebracht, das eine Verjüngung im Materialquerschnitt in einer radialen Richtung aufweist. Vorteilhaft kann so zwischen dem Gehäuseabschnitt und dem Schnapphaken die Elastizität für eine Bewegung des Schnapphakens in einer radialen Richtung zum Einschnappen des Schnapphakens in die Einrastkontur für eine erfindungsgemäße rotierende Maschine vorteilhaft zur Verfügung gestellt werden.

Es kann die Verjüngung gegenüber der Umgebung einer erfindungsgemäßen rotierenden Maschine verdeckt sein. Eine erfindungsgemäße rotierende Maschine kann somit vorteilhaft robust gegen Einwirkungen aus der Umgebung der Maschine, z. B. im industriellen Breiteneinsatz, vorteilhaft zur Verfügung gestellt werden.

In einer weiteren vorteilhaften Ausgestaltung einer erfindungsgemäßen rotierenden Maschine weist die schnappende Verbindungseinheit ein Federelement auf, das in einem eingeschnappten Zustand in der Einrastkontur elastisch verformt ist. So kann vorteilhaft die Befestigung des Lagerschilds an dem Gehäuseabschnitt mit der Einrastkontur unter Vorspannung mit dem Federelement vorteilhaft aufrechterhalten werden.

Der Gehäuseabschnitt mit der schnappenden Verbindungseinheit kann mit der schnappenden Verbindungseinheit ohne den Federelement in einem Stück aus einem metallischen Werkstoff hergestellt sein. Vorteilhaft kann so der Gehäuseabschnitt mit der schnappenden Verbindungseinheit ohne einen Federelement vorteilhaft robust in vorteilhaft einfacher Weise hergestellt werden.

Die schnappende Verbindungseinheit kann eine Kontur für das Federelement aufweisen, die sich um die Drehachse verlaufend als umlaufende Kontur fortsetzt. So kann vorteilhaft eine Nachbearbeitung des Gehäuseabschnitts mit der schnappende Verbindungseinheit für vorteilhaft präzise Abmessungen der Verbindungseinheit in radialen Richtungen mit einer spanenden Bearbeitung durch eine Drehmaschine hergestellt werden.

In einer weiteren vorteilhaften Ausgestaltung einer erfindungsgemäßen rotierenden Maschine ist die schnappende Verbindungseinheit von der Drehachse kommend in die Einrastkontur eingeschnappt. So müssen vorteilhaft die Gehäuseabschnitte auf ihrer Außenseite, d. h. der in der Umgebung außerhalb einer erfindungsgemäßen rotierenden Maschine sichtbaren Seiten der Gehäuseabschnitte vorteilhaft nicht deformierbar sein. Eine erfindungsgemäß rotierende Maschine kann somit vorteilhaft robust gegen Einwirkungen aus der Umgebung der Maschine, z. B. im industriellen Breiteneinsatz, vorteilhaft zur Verfügung gestellt werden.

In einer weitere vorteilhaften Ausgestaltung einer erfindungsgemäßen rotierenden Maschine ist die schnappende Verbindungsvorrichtung nicht durch elastische Deformation der Gehäuseabschnitte lösbar. So kann vorteilhaft eine erfind ungemäße rotierende Maschine kompakt mit hoher Leistungsfähigkeit, insbesondere hohem Drehmoment, zur Verfügung gestellt werden. Es können z. B. das Lagerschild und/oder der zweite Gehäuseabschnitt in einer dicken Wandstärke zur Übertragung des Drehmoments unmittelbar bis zu der schnappenden Verbindungsvorrichtung ausgeführt werden.

Es können hierbei die Gehäuseabschnitte mit ihren in axialer Richtung benachbarten Rändern formschlüssig gestoßen sein. Eine erfindungsgemäße rotierende Maschine kann so vorteilhaft robust gegen Einwirkungen aus der Umgebung der Maschine, z. B. im industriellen Breiteneinsatz, vorteilhaft zur Verfügung gestellt werden.

Es können Komponenten einer erfindungsgemäßen rotierenden Maschine in axialer Richtung in ihrer axialen Position nahe bei der schnappenden Verbindungsvorrichtung angeordnet sein. So kann vorteilhaft eine hohe Kompaktheit der rotierenden Maschine vorteilhaft erreicht werden.

In einer weiteren vorteilhaften Ausgestaltung einer erfindungsgemäßen rotierenden Maschine weist die Befestigungsvorrichtung eine weitere Verbindungsvorrichtung auf, die eine formschlüssige Verbindungsvorrichtung zur Fixierung des ersten Gehäuseabschnitts und des zweiten Gehäuseabschnitts relativ zueinander gegen ein Verdrehen um die Drehachse ist. So kann vorteilhaft eine erfindungsgemäße rotierende Maschine zur Verfügung gestellt werden, da die formschlüssige Verbindungsvorrichtung im Zusammenwirkung mit der schnappenden Verbindungsvorrichtung eine Übertragung von hohen Drehmomenten vorteilhaft ermöglicht, ohne weitere Verbindungsmittel zwischen dem Lagerschild und dem zweiten Gehäuseabschnitt zu benötigen. Vorteilhaft kann die formschlüssige Verbindung für eine richtige Orientierung der beiden Gehäuseabschnitte bei der Herstellung einer erfindungsgemäßen rotierenden Maschine genutzt werden. Insbesondere dann, wenn bei den einzelnen Gehäuseabschnitten selbst bei montierten Komponenten im Innenraum der Gehäuseabschnitte ein um einen Drehwinkel kleiner als 360 Grad um die Drehachse gedrehter Gehäuseabschnitt nur schwer gegenüber seiner Lage vor dem Drehen unterscheidbar ist.

In einer weiteren vorteilhaften Ausgestaltung einer erfindungsgemäßen rotierenden Maschine weist die formschlüssige Verbindungsvorrichtung eine erste Verbindungseinheit an dem ersten Gehäuseabschnitt und eine dazu korrespondierende erste Verbindungseinheit an dem zweiten Gehäuseabschnitt zur Bildung einer formschlüssigen Verbindung durch Zusammenschieben des ersten Gehäuseabschnitts und des zweiten Gehäuseabschnitts entlang der Welle auf. Durch das vorteilhafte Zusammenwirken der schnappenden Verbindungsvorrichtung und der formschlüssigen Verbindungsvorrichtung kann eine erfindungsgemäße rotierende Maschine vorteilhaft zur Verfügung gestellt werden, da das Lagerschild trotz einer Bewegungseinschränkung durch die Welle vorteilhaft einfach bei vorhandener Welle an dem zweiten Gehäuseabschnitt befestigt werden kann.

Die formschlüssige Verbindungsvorrichtung kann als eine Nut-Zapfen-Verbindung zwischen benachbarten Rändern des ersten Gehäuseabschnitts und des zweiten Gehäuseabschnitts gebildet sein. Da das Lagerschild durch die schnappende Verbindungsvorrichtung gegen den zweiten Gehäuseabschnitt mit einer axial wirkenden Presskraft gepresst ist, wird der Formschluss vorteilhaft nur durch in tangentialen Richtungen wirkende Kräfte belastet und kann so vorteilhaft einfach als Nut-Zapfen-Verbindung ausgeführt sein.

Die Nut-Zapfen-Verbindung kann durch eine Ausnehmung an dem Rand des ersten Gehäuseabschnitts und einen hervorstehenden Steg des Randes des zweiten Gehäuseabschnitts gebildet sein, wobei die Ausnehmung und der Steg in einer Draufsicht auf die rotierenden Maschine Berandungen aufweisen, die jeweils durch drei Geraden gebildet sind. So kann vorteilhaft die Nut-Zapfen-Verbindung durch eine vorteilhaft einfache Geometrie mit vorteilhaft geringem Herstellungsaufwand hergestellt werden.

In einer weiteren vorteilhaften Ausgestaltung einer erfindungsgemäßen Maschine weist die rotierende Maschine keine Öffnung für ein Betätigen der schnappenden Verbindungsvorrichtung von außerhalb der rotierenden Maschine auf. So kann vorteilhaft eine erfindungsgemäße rotierende Maschine für eine raue Umgebung vorteilhaft robust zur Verfügung gestellt werden, da ein Eindringen von Fremdkörpern oder Flüssigkeiten vorteilhaft vermieden wird. Vorteilhaft kann die rotierende Maschine eine elektrische Maschine sein. Eine Schnappverbindung kann ohne Öffnung für das Betätigen der schnappenden Verbindungsvorrichtung bei einer rotierenden elektrischen Maschine gemäß dem Oberbegriff des Patentanspruchs 1 vorteilhaft einen Schutz vor elektrischer Spannung bieten und es kann gleichzeitig vorteilhaft kostengünstig die rotierende elektrische Maschine in hoher Qualität zur Verfügung gestellt werden, so dass bei einer notwendigen Erneuerung einer Komponente im Innenraum der elektrischen Maschine die elektrische Maschine kostengünstig durch eine neue elektrische Maschine ersetzt werden kann anstatt dies mit lösbaren Schraubenverbindungen zu versehen, um diese für eine Erneuerung von Komponenten öffnen zu können.

In einer weiteren vorteilhaften Ausgestaltung einer erfindungsgemäßen rotierenden Maschine ist zwischen dem ersten Gehäuseabschnitt und dem zweiten Gehäuseabschnitt eine Dichtung angeordnet. So kann vorteilhaft eine erfindungsgemäße rotierende Maschine für eine raue Umgebung vorteilhaft robust zur Verfügung gestellt werden, da ein Eindringen von Fremdkörpern oder Flüssigkeiten vorteilhaft vermieden wird.

Die Dichtung kann, insbesondere als O-Ring, in radialen Richtungen zwischen dem ersten und zweiten Gehäuseabschnitt in einer um die Drehachse verlaufende Nut angeordnet sein. Eine erfindungsgemäße rotierende Maschine kann so vorteilhaft robust gegen Einwirkungen aus der Umgebung der rotierenden Maschine, z. B. im industriellen Breiteneinsatz, vorteilhaft zur Verfügung gestellt werden, da die Dichtung gegen die Einwirkungen aus der Umgebung vorteilhaft geschützt ist.

In einer weiteren vorteilhaften Ausgestaltung einer erfindungsgemäßen rotierenden Maschine ist einer der Gehäuseabschnitte ein Gussteil aus einem metallischen Werkstoff, insbesondere umfassend den zweiten Gehäuseabschnitt und den weiteren Gehäuseabschnitt oder bestehend aus dem Lagerschild, wobei an einem axialen Ende des Gehäuseabschnitts mit der schnappenden Verbindungseinheit weitere zu der schnappenden Verbindungseinheit baugleiche schnappende Verbindungseinheiten vorhanden sind, wobei die schnappenden Verbindungseinheiten um die Drehachse herum nebeneinander angeordnet sind. So kann vorteilhaft eine erfindungsgemäße rotierende Maschine vorteilhaft kompakt mit hoher Leistungsfähigkeit, insbesondere hohem Drehmoment zur Verfügung gestellt werden. Vorteilhaft können die schnappenden Verbindungseinheit und baugleichen schnappende Verbindungseinheiten durch spanende Bearbeitung deren Gehäuseabschnitts voneinander getrennt sein, z.B. durch Einfräsen, Einsägen oder schon entsprechend durch Urformen, z.B. Gießen, damit diese nebeneinander angeordnet sind.

Es kann vorteilhaft der Gehäuseabschnitt mit der schnappenden Verbindungseinheit und der zweiten Lagerungseinheit als Gussteil aus einem Stück hergestellt werden. Weiterhin kann vorteilhaft bei einer spanenden Nachbearbeitung nicht nur der Innenraum auf die erforderlichen Maße gebracht werden, sondern auch vorteilhaft in einer hohen Qualität mit demselben Nachbearbeitungsprozess die schnappende Verbindungsvorrichtung und ein Zentrierrand des Gussteil in der erforderlichen Genauigkeit auf Maß gebracht werden.

Wenn der Gehäuseabschnitt, der das Gussteil aus dem metallischen Werkstoff ist, aus dem Lagerschild besteht, kann ein weiterer Gehäuseabschnitt ein weiteres Lagerschild sein. So kann der zweite Gehäuseabschnitt vorteilhaft mit kostengünstigeren Verfahren in hoher Qualität hergestellt werden, z. B. mit einem Strangpressverfahren. Soweit z.B. bei einer Herstellung durch das Strangpressverfahren notwendig, kann hier ebenso durch eine spanenden Nachbearbeitung nicht nur der Innenraum auf die erforderlichen Maße gebracht werden, sondern auch vorteilhaft in einer hohen Qualität mit demselben Nachbearbeitungsprozess die schnappende Verbindungsvorrichtung und ein Zentrierrand des Gussteil in der erforderlichen Genauigkeit auf Maß gebracht werden.

In einer weiteren vorteilhaften Ausgestaltung einer erfindungsgemäßen rotierenden Maschine ist die rotierende Maschine eine elektrische Maschine. Eine erfindungsgemäße rotierende Maschine kann vorteilhaft eine elektrische Maschine sein, bei der vorteilhaft ein Schutz vor elektrischer Spannung vorhanden ist.

Bei einer erfindungsgemäßen rotierenden elektrischen Maschine, d. h. einer erfindungsgemäßen rotierenden Maschine, die eine elektrische Maschine ist, ist die drehende Komponente ein Rotor, der an der Welle befestigt ist und in einem Betrieb der rotierenden elektrischen Maschine mit einem Stator magnetisch zusammenwirkt, der in dem zweiten Gehäuseabschnitt befestigt ist.

In einem Betrieb einer erfindungsgemäßen rotierenden elektrischen Maschine als Generator wird der Rotor durch mechanische Energie in eine Drehung um die Drehachse versetzt. Durch das magnetische Zusammenwirken zwischen magnetischen Polen des Rotors und des Stator über einen Luftspalt kann die mechanische Energie in elektrische Energie umgewandelt werden. Die elektrische Energie kann an mindestens einer Wicklung, die am Stator befestigt ist und zu einer Bildung der magnetischen Pole des Stators beiträgt, durch Anschließen eines elektrischen Verbrauchers entnommen werden.

Bei einem Betrieb einer erfindungsgemäßen elektrischen Maschine als Motor wird über die mindestens eine Wicklung elektrische Energie zugeführt und durch das magnetische Zusammenwirken zwischen den magnetischen Polen des Stators und des erfindungsgemäßen Rotors über den Luftspalt elektrische Energie in mechanische Energie umgewandelt. Dabei wird das Drehmoment erzeugt, das den Rotor in Drehung um die Drehachse versetzen kann und es kann an der Welle mechanische Energie an einen mechanischen Verbraucher in Form einer Drehbewegung abgegeben werden.

Vorteilhafte Ausgestaltungen erfindungsgemäßer rotierender Maschinen, erfindungsgemäßer rotierender elektrischer Maschinen, sowie erfindungsgemäßer Verwendungen ergeben sich vorteilhaft durch Kombination einiger oder mehrerer beschriebener Merkmale. Die oben beschriebenen Eigenschaften, Merkmale und Vorteile dieser Erfindung sowie die Art und Weise, wie diese erreicht werden, werden klarer und deutlicher verständlich im Zusammenhang mit der nun folgenden Beschreibung der Ausführungsbeispiele, die anhand der Figuren näher erläutert werden.

Es zeigen:
- FIG 1: eine halbe Ansicht und einen halben Schnitt eines ersten Ausführungsbeispiels einer erfindungsgemäßen rotierenden Maschine,
- FIG 2: eine weitere Ansicht des ersten Ausführungsbeispiel gemäß der FIG 1,
- FIG 3: eine rechteckige Grundform eines Querschnitts eines Ausführungsbeispiel einer erfindungsgemäßen rotierenden Maschine entlang der Linie III-III,
- FIG 4: eine kreisförmige Grundform eines Querschnitts eines Ausführungsbeispiel einer erfindungsgemäßen rotierenden Maschine entlang der Linie IV-IV,
- FIG 5: einen Längsschnitt durch ein zweites Ausführungsbeispiel einer erfindungsgemäßen rotierenden Maschine,
- FIG 6: eine erste Momentaufnahme eines Zusammenschiebens bei einem dritten Ausführungsbeispiel einer erfindungsgemäßen rotierenden Maschine,
- FIG 7: eine zweite Momentaufnahme eines Zusammenschiebens bei dem dritten Ausführungsbeispiel einer erfindungsgemäßen rotierenden Maschine,
- FIG 8: eine dritte Momentaufnahme eines Zusammenschiebens bei dem dritten Ausführungsbeispiel einer erfindungsgemäßen rotierenden Maschine,
- FIG 9: ein Detail des dritten Ausführungsbeispiels einer erfindungsgemäßen rotierenden Maschine,
- FIG 10: eine Ansicht des dritten Ausführungsbeispiel einer erfindungsgemäßen rotierenden Maschine,
- FIG 11: einen Metallquerschnitt einer schnappenden Verbindungseinheit des ersten Ausführungsbeispiels einer erfindungsgemäßen rotierenden Maschine Schnitt entlang der Linie XI-XI.

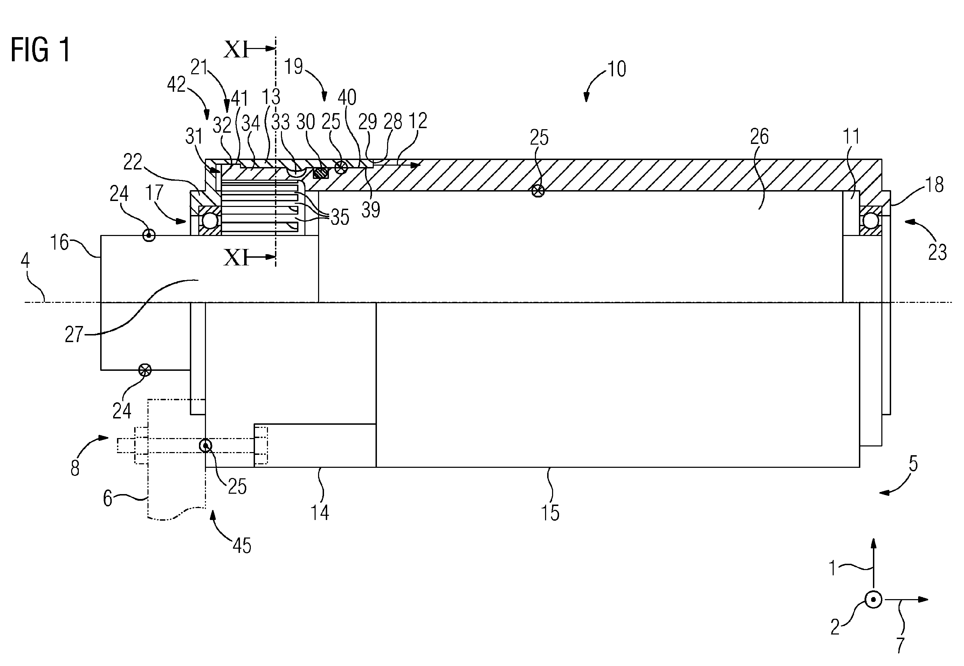

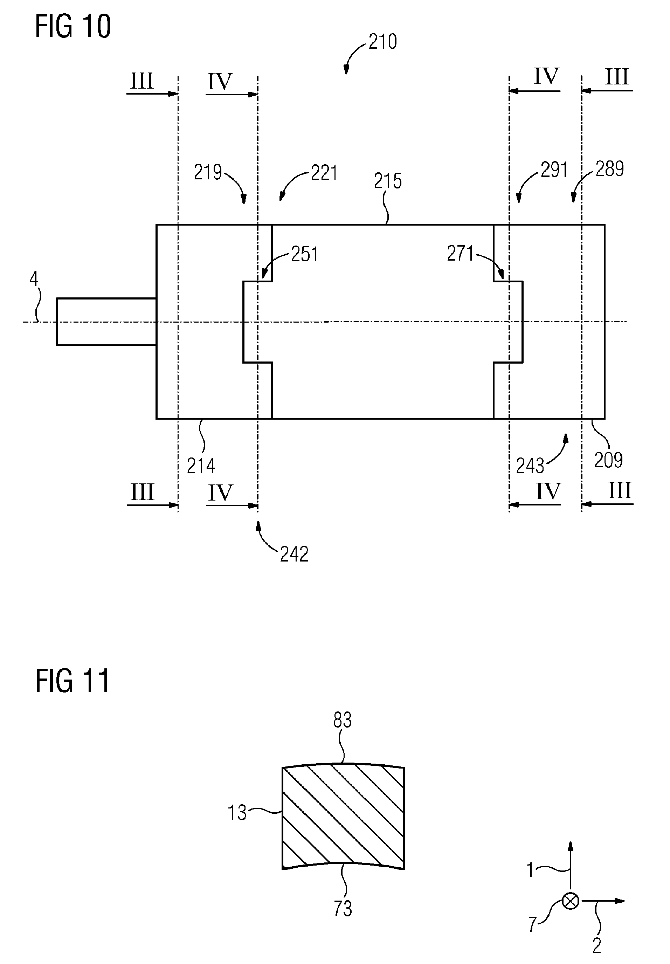

FIG 1 zeigt eine halbe Ansicht und einen halben Schnitt eines ersten Ausführungsbeispiels einer erfindungsgemäßen rotierenden Maschine 10, die die Gehäuseabschnitte 14, 15 und eine Welle 16 umfasst. Die Gehäuse 14, 15 umgeben einen Innenraum 11 der rotierenden Maschine 10 und legen den Innenraum 11 gegenüber einer Umgebung 5 außerhalb der rotierenden Maschine 10 fest. Ein erster Gehäuseabschnitt 14 der Gehäuseabschnitte 14, 15 ist ein Lagerschild 14 mit einer ersten Lagerungseinheit 17, wobei die Welle 16 mit einer ersten Lagerungsvorrichtung 22 in der ersten Lagerungseinheit 17 des Lagerschilds 14 und mit einer zweiten Lagervorrichtung 23 in einer zweiten Lagerungseinheit 18 eines weiteren Gehäuseabschnitts 15 um eine sich in einer axialen Richtung 7 erstreckenden Drehachse 4 drehbar gelagert ist. Das Lagerschild 14 ist durch eine Befestigungsvorrichtung 19 der rotierenden Maschine 10 an einem zweiten Gehäuseabschnitt 15 befestigt. In dem ersten Ausführungsbeispiel ist der zweite Gehäuseabschnitt 15 mit dem weiteren Gehäuseabschnitt 15 identisch. Die Befestigungsvorrichtung 19 weist eine schnappende Verbindungsvorrichtung 21 mit einer schnappenden Verbindungseinheit 31 auf. Das Lagerschild 14 ist durch die Verbindungsvorrichtung 21 gegen den zweiten Gehäuseabschnitt 15 mit einer axial wirkenden Presskraft 12 gepresst, wobei die Verbindungsvorrichtung 21 einen Metallquerschnitt 13 zum Ausüben der axialen Presskraft 12 zwischen dem Lagerschild 14 und dem zweiten Gehäuseabschnitt 15 aufweist. Der metallische Querschnitt, d.h. der Metallquerschnitt 13, erstreckt sich gemäß der FIG 1 und FIG 11 in eine Querschnittsebene der rotierenden Maschine 10, zu der die axiale Richtung 7 senkrecht steht. Die FIG 11 zeigt den Metallquerschnitt 13 einer schnappenden Verbindungseinheit 31 des ersten Ausführungsbeispiels einer erfindungsgemäßen rotierenden Maschine 10 Schnitt entlang der Linie XI-XI. Zur Vereinfachung der Darstellung sind die Metallquerschnitte der baugleichen schnappenden Verbindungseinheiten 35 nicht eingezeichnet. Radiale Richtungen 1, 2 erstrecken sich von der Drehachse 4 in Querschnittsebenen der rotierenden Maschine 10, wobei die axiale Richtung 7 senkrecht auf den radialen Richtungen 1,2 steht. Bei einem Betrieb des ersten Ausführungsbeispiel wird eine drehbare Komponente in eine Drehung um die Drehachse 4 versetzt und es kann an der Welle 16, an der die drehbare Komponente befestigt ist, mechanische Energie an einen mechanischen Verbraucher als Drehmoment abgegeben werden. Die bei der Abgabe der mechanischen Energie auftretenden Kräfte 24 führen zu Gegenkräften 25 in den Gehäuseabschnitten 14, 15 der rotierenden Maschine 10. Diese Gegenkräfte 25 müssen von den Gehäuseabschnitten 14, 15 aufgenommen werden und an einer Stütze 6 über eine Schraubenverbindung 8 mit einer Schraube und einer Mutter aus einem metallischen Werkstoff, d. h. mit einem Metallquerschnitt abgeführt werden. So ist eine Drehbewegung der Welle 16 relativ zur Umgebung 5 außerhalb der rotierenden Maschine 10 in definierter Weise möglich, da die Stütze 6 die rotierende Maschine 10 in der Umgebung 5 drehfest befestigt. Die Stütze 6 und die Schraubenverbindung 8 sind in der FIG 1 strichliert gezeichnet, da sie nicht zur rotierenden Maschine 10 gehören. Die rotierende Maschine 10 weist an ihrem ersten axialen Ende 45 an dem Lagerschild 14 eine Ausnehmung 74 zur Befestigung an der Stütze 6 auf. Das erste Ausführungsbeispiel der rotierenden Maschine 10 weist eine Umwandlungsvorrichtung 26 auf, die die drehende Komponente und eine in den zweiten Gehäuseabschnitt 15 befestigte feststehende Komponente aufweist. In einem Betrieb der rotierenden Maschine 10 kann durch die Umwandlungsvorrichtung 26 Energie in Form mechanischer Energie als Drehmoment über die Welle 16 abgegeben werden. Die Welle 16 erstreckt sich zur Übertragung des Drehmoments im Betrieb der rotierenden Maschine 10 durch eine Öffnung 27 des Lagerschilds 14.

Die schnappende Verbindungsvorrichtung 21 weist eine Einrastkontur 41 am Lagerschild 14 auf und der Gehäuseabschnitt 15 weist die schnappende Verbindungseinheit 31 auf. An dem Gehäuseabschnitt 15 mit der schnappenden Verbindungseinheit 31 ist ein Schnapphaken 32 mit dem Gehäuseabschnitt 15 mit der schnappenden Verbindungseinheit 32 in einem Stück aus einem metallischen Werkstoff bestehend hergestellt angebracht. Der Schnapphaken 32 ist über ein Verbindungsstück 34 an dem Gehäuseabschnitt 15 angebracht, das eine Verjüngung 33 im Materialquerschnitt einer radialen Richtung 1 aufweist. Die Verjüngung 33 ist gegenüber der Umgebung 5 der rotierenden Maschine 10 verdeckt, in dem das Lagerschild 14 über die Verjüngung 33 geschoben ist. Die schnappende Verbindungseinheit 31 ist von der Drehachse 4 kommend in die Einrastkontur 41 eingeschnappt. Die schnappende Verbindungsvorrichtung 21 ist nicht durch elastische Deformation der Gehäuseabschnitte 14, 15 lösbar. Das Lagerschild 14 ist in einer dicken Wandstärke zur Übertragung des Drehmoments unmittelbar bis zu der schnappenden Verbindungsvorrichtung 31 ausgeführt. In dem ersten Beispiel weist das Lagerschild 14 unmittelbar angrenzend an den Schnapphaken 32 seine axiale Berandung auf, die sich bis zu der Öffnung 27 für die Welle erstreckt. Auf Grund der radialen Berandung und des geringen Abstands zur schnappenden Verbindungsvorrichtung 21 kann keine ausreichende elastische Deformation zum Lösen der schnappenden Verbindungsvorrichtung 21 aufgebracht werden. Es müsste hierzu das Lagerschild 14 plastisch verformt werden. Der zweite Gehäuseabschnitt 15 ist in einer dicken Wandstärke aus dem metallischen Werkstoff hergestellt. Im Bereich der schnappenden Verbindungsvorrichtung 21 ist das Lagerschild 14 über den Gehäuseabschnitt 15 mit der schnappenden Verbindungseinheit 31 geschoben. So ist in dem Bereich der schnappenden Verbindungsvorrichtung 21 ebenso auf Grund der dicken Wandstärke aus dem Lagerschild 14 und dem Gehäuseabschnitt 15 eine dicke Wandstärke vorhanden, die eine elastische Deformation zum Lösen der schnappenden Verbindungsvorrichtung 21 nicht ermöglicht. Die Gehäuseabschnitte 14, 15 sind mit ihren in axialer Richtung 7 benachbarten Rändern 28, 29 formschlüssig gestoßen. Auf Grund der dicken Wandstärke des Lagerschilds 14 und des Gehäuseabschnitts 15 mit der schnappenden Verbindungseinheit 31 sind die in axialer Richtung benachbarten Ränder 28, 29 in ihrer relativen radialen Position in radialer Richtung 1 nicht durch eine rein elastische Deformation zueinander verschiebbar. Um die relative radiale Position der benachbarten Ränder 28, 29 zu verändern müssten die Ränder 28, 29 oder das Lagerschild 14 oder der Gehäuseabschnitt 15 derart plastisch verformt werden, dass sich zwischen den Rändern 28, 29 eine derart große Lücke ergibt, dass die beiden dicken Ränder 28, 29 aneinander vorbeiführbar sind. Da eine elastische Deformation der Gehäuseabschnitte bei einer erfindungsgemäßen rotierenden Maschine vorteilhaft nicht notwendig ist, kann die Umwandlungsvorrichtung 26 in axialer Richtung 7 in ihrer axialen Position nahe bei der schnappenden Verbindungsvorrichtung 21 angeordnet sein. Dies ermöglicht ebenso vorteilhaft wie die nahe an der schnappenden Verbindungsvorrichtung 21 angeordnete radiale Berandung des Lagerschilds 14 eine kompakte erfindungsgemäße rotierende Maschine. Das erste Ausführungsbeispiel der rotierenden Maschine 10 weist keine Öffnungen für ein Betätigen der schnappenden Vorrichtung 21 von außerhalb der rotierenden Maschine 10 auf. Zwischen dem ersten Gehäuseabschnitt 14 und dem zweiten Gehäuseabschnitt 15 ist eine Dichtung 30 angeordnet. Die Dichtung 30 ist ein O-Ring, der in radialen Richtungen 1,2 zwischen dem ersten Gehäuseabschnitt 14 und zweiten Gehäuseabschnitt 15 in einer um die Drehachse verlaufende Nut angeordnet ist. Eine der Gehäuseabschnitte 14, 15 ist ein Gussteil aus dem metallischen Werkstoff und umfasst den zweiten Gehäuseabschnitt 15, der identisch mit dem weiteren Gehäuseabschnitt 15 ist. Der metallische Werkstoff ist in dem Ausführungsbeispiel gemäß der FIG 1 Stahlguss. Bei dem ersten Ausführungsbeispiel gemäß der FIG 1 kann so vorteilhaft kostengünstig in einer hohen Qualität der Gehäuseabschnitt 15 mit der schnappenden Verbindungseinheit 31 und der zweiten Lagerungseinheit 18 als Gussteil aus einem Stück hergestellt werden und bei einer spanenden Nachbearbeitung nicht nur der Innenraum 11 auf die erforderlichen Maße gebracht werden, sondern auch vorteilhaft kostengünstig in einer hohen Qualität mit demselben Nachbearbeitungsprozess die schnappende Verbindungsvorrichtung 21 und ein Zentrierrand 40 des Gussteil in der erforderlichen Genauigkeit auf Maß gebracht werden. Vorteilhaft kostengünstig ist auch das Lagerschild 14 ein Gussteil, dessen Zentrierrand 39 und die Einrastkontur 41 in einer hohen Qualität durch eine spanende Nachbearbeitung auf Maß gebracht werden. So kann vorteilhaft kostengünstig in einer hohen Qualität in einem Betrieb einer erfindungsgemäßen rotierenden Maschine an der Welle 16 ein Drehmoment in hoher Qualität zur Verfügung gestellt werden. Das Gussteil weist die schnappende Verbindungseinheit 31 an einem axialen Ende 42 des Gehäuseabschnitts 15 mit der schnappenden Verbindungseinheit 31 auf, sowie weitere baugleiche schnappende Verbindungseinheiten 35, wobei die schnappenden Verbindungseinheiten 31, 35 um die Drehachse 4 herum nebeneinander angeordnet sind.

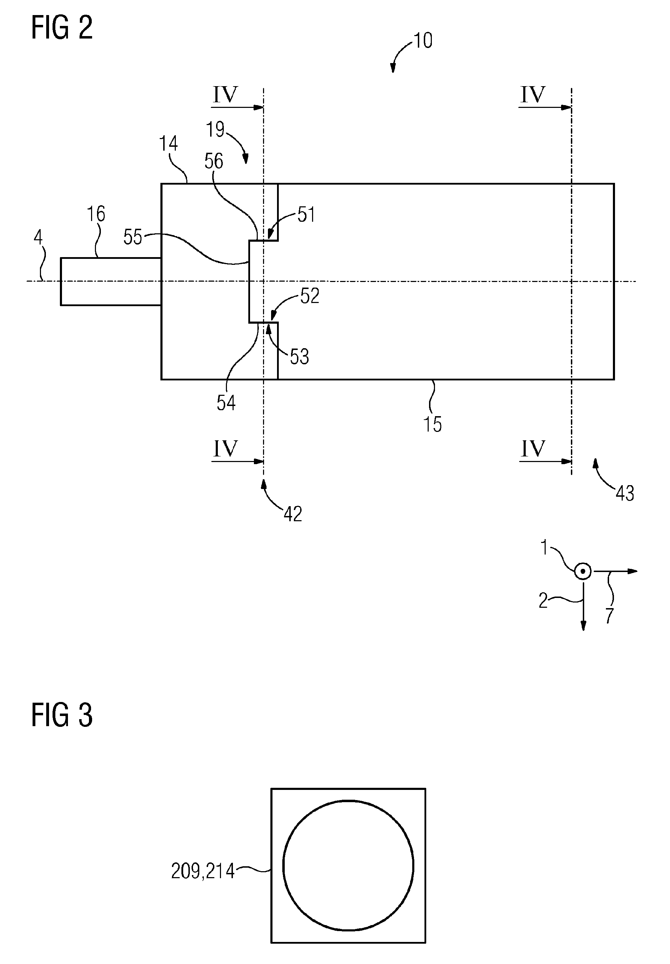

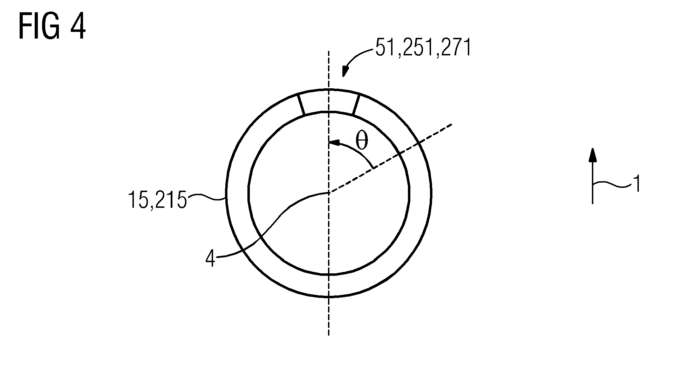

Die FIG 2 zeigt eine weitere Ansicht des ersten Ausführungsbeispiels der FIG 1. Der erste Gehäuseabschnitt 15 und der zweite Gehäuseabschnitt sind in der axialen Richtung 7 in einer Reihe angeordnet. Die Befestigungsvorrichtung 19 der rotierenden Maschine 10 weist eine weitere Verbindungsvorrichtung 51 auf, die eine formschlüssige Verbindungsvorrichtung zur Fixierung des ersten Gehäuseabschnitts 14 und des zweiten Gehäuseabschnitts 15 relativ zueinander gegen ein Verdrehen um die Drehachse 4 ist. Die rotierende Maschine 10 weist an dem axialen Ende 42 des zweiten Gehäuseabschnitts 15 einen Querschnitt auf, der eine kreisförmige Grundform gemäß der FIG 4 aufweist. Der zweite Gehäuseabschnitt 15 mit der schnappenden Verbindungseinheit 31 erstreckt sich von seinem axialen Ende 42 entlang der axialen Richtung 7 bis zu einem weiteren axialen Ende 43 des zweiten Gehäuseabschnitts 15. Der Gehäuseabschnitt 15, d. h. das Gussteil hat auch in der Nähe des weiteren axialen Endes 43 einen Querschnitt, der die kreisförmige Grundform gemäß der FIG 4 aufweist, wobei der Gehäuseabschnitt 15 in der Nähe des weiteren axialen Endes 43 nicht die in der FIG 4 eingezeichnete weitere Verbindungsvorrichtung 51 aufweist, sondern das Gussteil ein topfartiges Teil ist, das ein weiteres Lagerschild mit der zweiten Lagerungseinheit 18 aufweist. Die formschlüssige Verbindung 51, d. h. die weitere Verbindungsvorrichtung 51 kann vorteilhaft für eine richtige Orientierung der beiden Gehäuseabschnitte 14, 15 bei der Herstellung der rotierenden Maschine 10 genutzt werden. Wenn man den Gehäuseabschnitt 15 gemäß der FIG 4 um einen Drehwinkel θ kleiner als 360° um die Drehachse 4 dreht, so wäre er gegenüber seiner Lage vor dem Drehen nicht unterscheidbar, wenn nicht die weitere Verbindungsvorrichtung 51 vorhanden wäre. Dies trifft auch in vielen Fällen bei montierten Komponenten im Innenraum 11 zu, da dessen richtige Lage nicht so einfach erkennbar ist, wie die der weiteren Verbindungsvorrichtung 51. Die formschlüssige Verbindungsvorrichtung 51 weist eine erste Verbindungseinheit 52 an den ersten Gehäuseabschnitt 14 und eine dazu korrespondierende erste Verbindungseinheit 53 an dem zweiten Gehäuseabschnitt 15 zur Bildung einer formschlüssigen Verbindung durch Zusammenschieben des ersten Gehäuseabschnitts 14 und des zweiten Gehäuseabschnitts 15 entlang der Welle 16 auf. Die formschlüssige Verbindungsvorrichtung 51 wird als eine Nut-Zapfen-Verbindung zwischen den in axialer Richtung 7 benachbarten Rändern 28, 29 des ersten Gehäuseabschnitts 14 und des zweiten Gehäuseabschnitts 15 gebildet. Die Nut-Zapfen-Verbindung ist durch eine Ausnehmung an dem Rand 28 des ersten Gehäuseabschnitts 14 und einen hervorstehenden Steg des Randes 29 des zweiten Gehäuseabschnitts 15 gebildet, wobei die Ausnehmung und der Steg in einer Draufsicht auf die rotierende Maschine 10 Berandungen aufweisen, die jeweils durch drei Geraden 54, 55, 56 gebildet sind. Dabei ist die FIG 2 die Draufsicht auf die rotierende Maschine 10. Bei der rotierenden Maschine 10 ist das Lagerschild 14 an dem zweiten Gehäuseabschnitt 15 mit den Schnapphaken 32 und den weiteren baugleichen Schnapphaken der weiteren Verbindungseinheiten 35 axial fixiert, die radiale Bestimmung erfolgt durch die Zentrierränder 39, 40 des ersten und zweiten Gehäuseabschnitts 14, 15 und der Freiheitsgrad um die Drehachse 4 wird durch die weitere formschlüssige Verbindungsvorrichtung 51 unterbunden. Die weitere Verbindungsvorrichtung 51 kann als Nut-Zapfen-Verbindung durch die Berandung mit den drei Geraden 54, 55, 56 bei einem Urformen des zweiten Gehäuseabschnitts 15 oder bei einem Arbeitsgang einer Nachbearbeitung von Zentrierrändern und Lagerschildern vorteilhaft kostengünstig in einer hohen Qualität hergestellt werden. So wird vorteilhaft kostengünstig in einer hohen Qualität eine rotierende Maschine zur Verfügung gestellt.

Bei einem ersten Ausführungsbeispiel einer erfindungsgemäßen Verwendung eines Gehäuseabschnitts 14 für eine rotierende Maschine wird der Gehäuseabschnitt 14 als Lagerschild 14 für die schnappende Verbindungsvorrichtung 21 der rotierenden Maschine 10 verwendet, wobei die schnappende Verbindungsvorrichtung 21 mit der schnappenden Verbindungseinheit 31 die Verbindungsvorrichtung 31 der rotierenden Maschine 10 ist.

In einem zweiten Ausführungsbeispiel einer Verwendung eines Gehäuseabschnitts 15 für eine rotierende Maschine 10, wird der Gehäuseabschnitt 15 als zweiter Gehäuseabschnitt 15 für die schnappende Verbindungsvorrichtung 21 der rotierenden Maschine 10, verwendet. Dabei weist in beiden Ausführungsbeispielen einer erfindungsgemäßen Verwendung die rotierende Maschine 10, die Befestigungsvorrichtung 19 mit der Verbindungsvorrichtung 21 auf, wobei das Lagerschild 14 durch die Befestigungsvorrichtung 19 an dem zweiten Gehäuseabschnitt 115 befestigt ist, wobei die Verbindungsvorrichtung 21 den Metallquerschnitt 13 zum Ausüben der axialen Presskraft 12 zwischen dem Lagerschild 14 und dem zweiten Gehäuseabschnitt 15 aufweist.

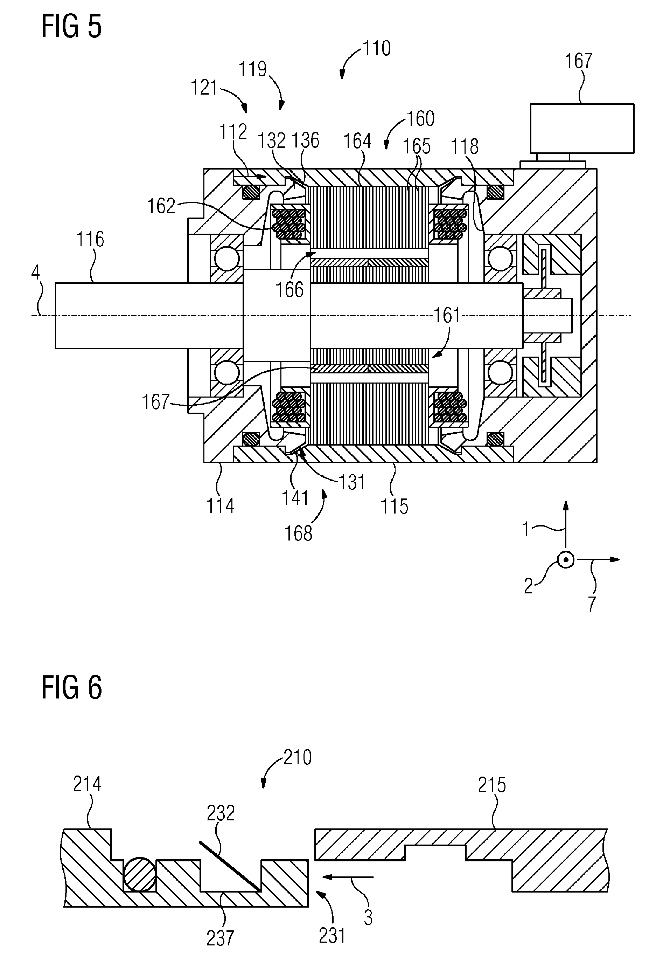

FIG 5 zeigt einen Längsschnitt durch ein zweites Ausführungsbeispiel einer erfindungsgemäßen rotierenden Maschine 110. Dieses Ausführungsbeispiel weist Merkmale auf, die anhand der FIG 1, 2 und 4 beschrieben wurden. Die Merkmale sind in FIG 5 größtenteils mit Bezugszeichen versehen, die aus dem Bezugszeichen der FIG 1, 2 und 4 durch Voranstellen einer "1" entstanden sind. So ist z. B. die Beschreibung für die schnappende Verbindungsvorrichtung 21 der FIG 1 entsprechend auf die schnappende Verbindungsvorrichtung 121 der FIG 5 zu übertragen. Auf die unterschiedlichen Merkmale der schnappenden Verbindungsvorrichtung 121 gemäß FIG 5 gegenüber der schnappenden Verbindungsvorrichtung 21 der FIG 1, 2 und 4 wird nachfolgende eingegangen. Das Lagerschild 114 weist die schnappende Verbindungseinheit 131 auf und die schnappende Verbindungsvorrichtung 121 weist eine Einrastkontur 141 am zweiten Gehäuseabschnitt 115 auf. Somit ist ein Unterschied zwischen dem ersten Ausführungsbeispiel gemäß der FIG 1 und dem zweiten Ausführungsbeispiel gemäß der FIG 5 von rotierenden Maschinen 10, 110, dass die schnappenden Verbindungseinheit 31, 131 gemäß der FIG 1 an dem zweiten Gehäuseabschnitt 15 angebracht ist und gemäß der FIG 2 an dem Lagerschild 114 angebracht ist. Vorteilhaft kostengünstig in einer hohen Qualität kann so bei dem Ausführungsbeispiel gemäß der FIG 5 der zweite Gehäuseabschnitt 115 als Gussteil hergestellt werden und die Nachbearbeitung des zweiten Gehäuseabschnitts 115 inklusive der Einrastkontur 141 kann alleine durch spanende Nachbearbeitung mit einer Drehmaschine erfolgen. Die Einrastkontur 141 ist auch hier eine umlaufende Ausnehmung an der Innenseite des zweiten Gehäuseabschnitts 115. Das Gussteil ist in diesem zweiten Ausführungsbeispiel einer erfindungsgemäßen rotierenden Maschine 110 aus einem metallischen Werkstoff hergestellt, der Aluminium aufweist, insbesondere eine Aluminiumlegierung ist. Das Lagerschild 114 mit den Schnapphaken 132 und den weiteren baugleichen Schnapphaken der weiteren Verbindungseinheiten ist aus einem metallischen Werkstoff hergestellt, der Aluminium aufweist, insbesondere eine Aluminiumlegierung ist. Das zweite Ausführungsbeispiel gemäß der FIG 5 ist eine elektrische Maschine.

Bei einer erfindungsgemäßen rotierenden elektrischen Maschine 110, wie z.B. bei dem zweiten Ausführungsbeispiel der FIG 5, kann durch ein magnetisches Zusammenwirken zwischen dem an der Welle 116 befestigten Rotor 161 als drehende Komponente und einem Stator 160 mechanische Energie in elektrische Energie umgewandelt werden und umgekehrt. Der Stator 160 ist in dem zweiten Gehäuseabschnitt 115 befestigt. Die elektrische Energie kann an einer Wicklung 162, die am Stator 160 befestigt ist, zugeführt werden und durch das magnetische Zusammenwirken zwischen magnetischen Polen des Stators 160 und des Rotors 161 in mechanische Energie umgewandelt werden. Dabei wird das Drehmoment erzeugt, das den Rotor 161 in Drehung um die Drehachse 4 versetzen kann und es kann an der Welle 116 mechanische Energie an einen mechanischen Verbraucher in Form einer Drehbewegung abgegeben werden. Der Stator 160 weist ein Blechpaket 164 auf, das von einem ersten axialen Ende bis zu einem zweiten axialen Ende des Stators 160 geschichtete Bleche 165 umfasst. Die geschichteten Bleche 165 dienen zur Führung des magnetischen Flusses in einem Betrieb der rotierenden elektrischen Maschine 110. Der Rotor 161 weist eine Einrichtung auf, um über einen Luftspalt 166 mit dem Stator 160, insbesondere mit der am Stator 160 befestigten Wicklung 163, magnetisch zusammenwirken zu können. In dem zweiten Ausführungsbeispiel einer erfindungsgemäßen rotierenden Maschine 110 umfasst die Einrichtung Permanentmagnete 167, so dass der Rotor 49 ein permanenterregter Rotor ist. Über einen Anschlusskasten 167 können die Wicklung 162 und weitere Wicklungen des Stators 160 zu einer Bildung der magnetischen Pole des Stators 160 zum magnetischen Zusammenwirken mit dem Rotor 161 an eine Drehphasen-Wechselstromquelle angeschlossen werden. So kann die rotierende elektrische Maschine 110 als Drehstrommotor betrieben werden.

Bei der rotierenden elektrischen Maschine 110 gemäß der FIG 5 ist in dem Gehäuseabschnitt 115 mit der Einrastkontur 141 eine Komponente der rotierenden Maschine 110 in einer axialen Position 168 zum zusätzlichen Aufrechterhalten eines eingeschnappten Zustands des Schnapphakens 132 in der Einrastkontur 141 befestigt. Bei dem zweiten Ausführungsbeispiel gemäß der FIG 5 ist die Komponente das Blechpaket 164 des Stators 160. Die Komponente, d. h. das Blechpaket 164 umschließt die Drehachse 4 entlang der axialen Position 168 des zweiten Gehäuseabschnitts 115 um die Drehachse 4 verlaufend, wobei der zweite Gehäuseabschnitt 115 der Gehäuseabschnitt mit der Einrastkontur 141 ist. Die Komponente, d. h. das Blechpaket 164 ist auf Grund der federnden Wirkung der geschichteten Bleche 165 elastisch deformierbar. Damit der Schnapphaken 132 in die Einrastkontur 141 einschnappen kann, wird bei einem Zusammenschieben des ersten Gehäuseabschnitts 114, d. h. dem Lagerschild 114, und dem zweiten Gehäuseabschnitt 115 das Blechpaket 164 durch den Schnapphaken 132 in der axialen Richtung 7 elastisch deformiert, d. h. zusammengepresst. Nach dem Einschnappen des Schnapphakens 132 federt das Blechpaket 164 wieder elastisch zurück auf die axiale Position 168, sodass das Blechpaket 164 zusätzlich zum Aufrechterhalten des eingeschnappten Zustands beiträgt.

Bei einem dritten Ausführungsbeispiel einer erfindungsgemäßen Verwendung eines Gehäuseabschnitts 114 für eine rotierende Maschine, insbesondere rotierende elektrische Maschine 110, wird der Gehäuseabschnitt 114 als Lagerschild 114 für die schnappende Verbindungsvorrichtung 121 der rotierenden Maschine, insbesondere rotierende elektrische Maschine 110 verwendet, wobei die schnappende Verbindungsvorrichtung 121 mit der schnappenden Verbindungseinheit 131 die Verbindungsvorrichtung 131 der rotierenden Maschine, insbesondere der rotierenden elektrischen Maschine 110 ist.

In einem vierten Ausführungsbeispiel einer Verwendung eines Gehäuseabschnitts 115 für eine rotierende Maschine, insbesondere rotierende elektrische Maschine 110, wird der Gehäuseabschnitt 115 als zweiter Gehäuseabschnitt 115 für die schnappende Verbindungsvorrichtung 121 der rotierenden Maschine, insbesondere der rotierenden elektrischen Maschine 110, verwendet. Dabei weist in beiden Ausführungsbeispielen einer erfindungsgemäßen Verwendung die rotierende Maschine, insbesondere die rotierende elektrische Maschine 110, die Befestigungsvorrichtung 119 mit der Verbindungsvorrichtung 121 auf, wobei das Lagerschild 114 durch die Befestigungsvorrichtung 119 an dem zweiten Gehäuseabschnitt 115 befestigt ist, wobei die Verbindungsvorrichtung 121 den Metallquerschnitt 113 zum Ausüben der axialen Presskraft 112 zwischen dem Lagerschild 114 und dem zweiten Gehäuseabschnitt 115 aufweist.

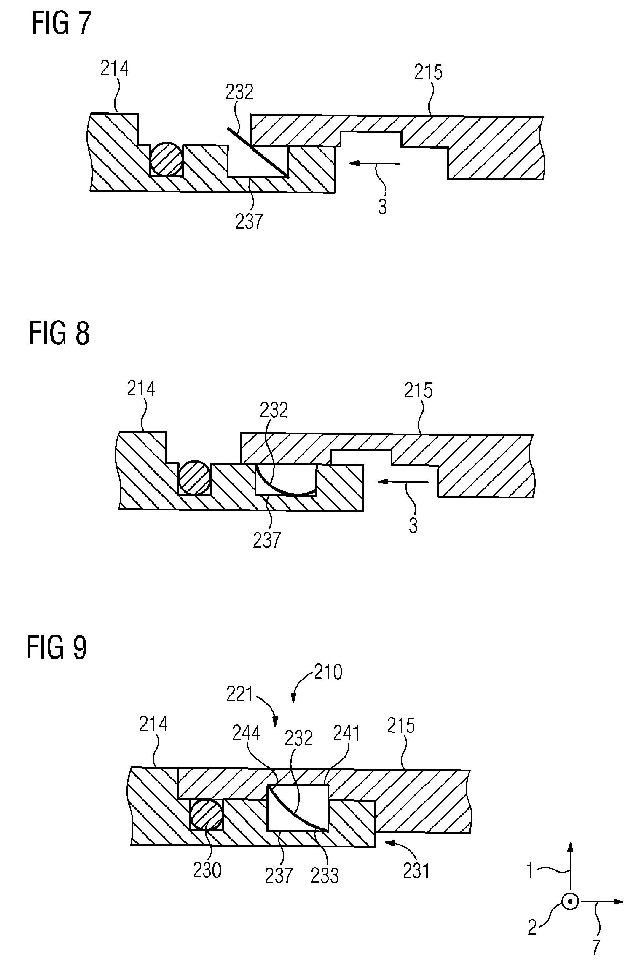

Die FIG 9 zeigt ein Detail eines dritten Ausführungsbeispiels einer erfindungsgemäßen rotierenden Maschine 210. Dieses Ausführungsbeispiel weist Merkmale auf, die anhand der FIG 1, FIG 2, FIG 4, FIG 5, beschrieben wurden. Die Merkmale sind in der FIG 9 größtenteils mit Bezugszeichen versehen, die aus den Bezugszeichen der FIG 1, 2, 4 und 5 durch Ändern der ersten Ziffer "1" in eine Ziffer "2" entstanden sind bzw. bei fehlenden dreistelligen Bezugszeichen der FIG 5 durch Voranstellen einer "2" entstanden sind. So ist z.B. die Beschreibung für den ersten Gehäuseabschnitt 114 der FIG 5 auf den ersten Gehäuseabschnitt 214 der FIG 9 zu übertragen. Auf der unterschiedlichen Merkmale der rotierenden Maschine, insbesondere rotierenden elektrischen Maschine 210, gemäß FIG 9 gegenüber der rotierenden Maschine 110 der FIG 5 wird nachfolgend eingegangen. Die schnappende Verbindungseinheit 231 weist ein Federelement 232 auf, das in einem eingeschnappten Zustand in der Einrastkontur 241 elastisch verformt ist. In dem dritten Ausführungsbeispiel gemäß der FIG 9 ist das Federelement 232 ein Federring, der in einer Ausnehmung der Einrastkontur 241 vorhanden ist. Vorteilhaft kostengünstig kann in einer hohen Qualität ein einstückiger Federring verwendet werden, der sich um die Drehachse 4 verlaufend bis auf eine Unterbrechung zwischen zwei benachbarten schnappenden Verbindungseinheiten in der umlaufenden Einrastkontur 241 verläuft. Das Federelement 232 stützt sich mit seinem äußerem radialen Ende 244 in der Einrastkontur 241 und mit seinem innerem radialen Ende 233 an einer Kontur 233 der schnappenden Verbindungseinheit 231 ab, die durch eine Ausnehmung gebildet ist. Die schnappende Verbindungseinheit 231 weist so eine Kontur 233 für das Federelement 232 auf, die sich um die Drehachse 4 verlaufend als umlaufende Kontur fortsetzt.

Die FIG 6, 7 und 8 zeigen Momentaufnahmen des Zusammenschiebens bei dem dritten Ausführungsbeispiel einer erfindungsgemäßen rotierenden Maschine 210. Bei einem fünften Ausführungsbeispiel einer erfindungsgemäßen Verwendung eines Gehäuseabschnitts 214 bei einer rotierenden Maschine, insbesondere einer rotierenden elektrischen Maschine 210, wird der Gehäuseabschnitt 214 als Lagerschild 214 für die schnappende Verbindungsvorrichtung 221 der rotierenden Maschine 210 verwendet. Bei dieser Verwendung wird der Gehäuseabschnitt 214 bei der schnappenden Verbindungsvorrichtung 221 mit dem Federelement 232 verwendet.

Bei einem sechsten Ausführungsbeispiel einer Verwendung eines Gehäuseabschnitts 215 für eine rotierende Maschine, insbesondere einer rotierenden elektrischen Maschine 210 wird der Gehäuseabschnitt 215 als zweiter Gehäuseabschnitt für die schnappende Verbindungsvorrichtung 210 der rotierenden Maschine, insbesondere der rotierenden elektrischen Maschine 210, verwendet, wobei für die schnappende Verbindungsvorrichtung 221 ein Federelement 232 verwendet wird.

Die FIG 6 zeigt die erste Momentaufnahme, bei der das Federelement 232 über die Ausnehmung 237 der schnappenden Verbindungseinheit 231 hinausragt. In der ersten Momentaufnahme wird für das Zusammenschieben der Gehäuseabschnitt 215 in der Richtung 3 parallel zu der axialen Richtung 7 geschoben. Die FIG 7 zeigt, dass die Gehäuseabschnitte 214, 215 soweit zusammengeschoben sind, dass das Federelement 232 kurz vor einer beginnenden elastischen Deformation steht. Die FIG 8 zeigt eine Momentaufnahme, bei der das Federelement 232 so stark elastisch verformt ist, dass es sich vollständig in der Ausnehmung 237 der schnappenden Verbindungseinheit 231 befindet. Dabei wird der Gehäuseabschnitt 215 weiterhin in Richtung 3 für das Zusammenschieben geschoben. Nach dem Zusammenschieben der Gehäuseabschnitte 214, 215 liegt die Einrastkontur 241 bezüglich ihrer axialen Position über die Ausnehmung der schnappenden Verbindungseinheit 231, sodass sich das Federelement gegenüber der starken elastischen Deformation gemäß der FIG 8 zu einer geringeren elastischen Deformation entspannen kann.

Die FIG 10 zeigt eine Ansicht des vierten Ausführungsbeispiels einer erfindungsgemäßen rotierenden Maschine 210. Einer der Gehäuseabschnitte 209, 214, 215, und zwar der erste Gehäuseabschnitt 214, ist ein Gussteil aus einem metallischen Werkstoff und besteht aus dem Lagerschild 214, wobei das Gussteil die schnappende Verbindungseinheit an seinem axialen Ende 242 aufweist, sowie weitere baugleiche schnappende Verbindungseinheiten, wobei die schnappenden Verbindungseinheiten um die Drehachse 4 herum nebeneinander angeordnet sind. In dem dritten Ausführungsbeispiel ist der metallische Werkstoff des Guss teils Aluminium, insbesondere eine Aluminiumlegierung. Das dritte Ausführungsbeispiel gemäß der FIG 10 weist einen abgesehen von der Öffnung des Lagerschilds 214 zum ersten Gehäuseabschnitt 214 baugleichen weiteren Gehäuseabschnitt 209 auf, der an dem weiteren axialen Ende 243 des zweiten Gehäuseabschnitts 215 an dem zweiten Gehäuseabschnitt 215 befestigt ist. Die hierzu verwendete zweite Befestigungsvorrichtung 289 hat denselben prinzipiellen Aufbau wie die Befestigungsvorrichtung 219 des ersten Gehäuseabschnitts 214 und des zweiten Gehäuseabschnitts 215 auf, d. h., dass die zweite Befestigungsvorrichtung 289 ebenso eine zweite schnappende Verbindungsvorrichtung 291 und eine zweite weitere Verbindungsvorrichtung 271 mit dem prinzipiellen baugleichen Aufbau wie die schnappende Verbindungsvorrichtung 221 und die weitere Verbindungsvorrichtung 251 aufweist. So kann vorteilhaft kostengünstig in einer hohen Qualität der zweite Gehäuseabschnitt 215 mit einem Strangpressverfahren aus Aluminium, insbesondere einer Aluminiumlegierung, hergestellt werden. Vorteilhaft kostengünstig kann sich eine Nachbearbeitung des zweiten Gehäuseabschnitts 215 auf eine spanabhebende Bearbeitung auf einer Drehmaschine beschränken. Vorteilhaft kostengünstig kann auf Grund der schnappenden Verbindungseinheit 221 mit dem Federelement 231 eine Nachbearbeitung der Lagerschilde 209, 214 für präzise Abmessungen in radialen Richtungen 1, 2 durch eine spanabhebende Bearbeitung auf einer Drehmaschine vorteilhaft einfach erfolgen.

Die FIG 3 zeigt eine rechteckige Grundform eines Querschnitts eines Ausführungsbeispiels einer erfindungsgemäßen rotierenden Maschine, wobei das dritte Ausführungsbeispiel einer erfindungsgemäßen rotierenden elektrischen Maschine 210 in einem Bereich des ersten Gehäuseabschnitts 214 und des weiteren Gehäuseabschnitts 209 die rechteckige Grundform aufweist. Der Innenraum der rotierenden elektrischen Maschine 210 weist dagegen eine kreisförmige Berandung in Querschnittsebenen senkrecht zu der axialen Richtung 7 auf. So können vorteilhaft kostengünstig in einer hohen Qualität die Berandung des Innenraums und in radialen Richtungen außenliegenden Flächen 83 und innenliegenden Flächen 73 der schnappenden Verbindungseinheiten wie bei dem Metallquerschnitt 13 der FIG 11 ausgeführt durch eine spanende Bearbeitung an einer Drehmaschine in radialen Richtungen vorteilhaft präzise auf Maß gebracht werden, da sie eine kreisförmige Berandung aufweisen.

Obwohl die Erfindung im Detail durch die bevorzugten Ausführungsbeispiele näher beschrieben wurde, ist sie nicht auf die offenbarten Beispiele beschränkt. Andere Variationen können vom Fachmann jeweils abgeleitet werden, ohne den Schutzumfang der Erfindung zu verlassen.

## Patentansprüche

1. Rotierende Maschine (10, 110, 210), umfassend Gehäuseabschnitte (14, 15, 114, 115, 214, 215, 209) und eine Welle (16, 116),
- wobei die Gehäuseabschnitte (14, 15, 114, 115, 214, 215, 209) einen Innenraum (11) der rotierenden Maschine (10, 110, 210) umgeben und den Innenraum (11) gegenüber einer Umgebung (4) außerhalb der rotierenden Maschine (10, 110, 210) festlegen,
- wobei ein erster Gehäuseabschnitt (14, 114, 214) der Gehäuseabschnitte (14, 15, 114, 115, 214, 215, 209) ein Lagerschild (14, 114, 214) mit einer ersten Lagerungseinheit (17) ist,
- wobei die Welle (16, 116) mit einer ersten Lagerungsvorrichtung (22) in der ersten Lagerungseinheit (17) des Lagerschilds (14, 114, 214) und mit einer zweiten Lagerungsvorrichtung (23) in einer zweiten Lagerungseinheit (18, 118) eines weiteren Gehäuseabschnitts (15, 209) um eine sich in einer axialen Richtung (7) erstreckenden Drehachse(4) drehbar gelagert ist,
- wobei das Lagerschild (14, 114, 214) durch eine Befestigungsvorrichtung (19, 119, 219) der rotierenden Maschine (10, 110, 210) an einem zweiten Gehäuseabschnitt (15, 115, 215) befestigt ist,
- wobei die Befestigungsvorrichtung (19, 119, 219) eine Verbindungsvorrichtung (21, 121, 221) aufweist,
- wobei das Lagerschild (14, 114, 214) durch die Verbindungsvorrichtung (21, 121, 221) gegen den zweiten Gehäuseabschnitt (15, 115, 215) mit einer axial wirkenden Presskraft (12, 112) gepresst ist,
- wobei die Verbindungsvorrichtung (21, 121, 221) einen Metallquerschnitt zum Ausüben der axialen Presskraft (12, 112) zwischen dem Lagerschild (14, 114, 214) und dem zweiten Gehäuseabschnitt (15, 115, 215) aufweist,
**dadurch gekennzeichnet, dass** die Verbindungsvorrichtung (21, 121, 221) eine schnappende Verbindungsvorrichtung (21, 121, 221) mit einer schnappenden Verbindungseinheit (31, 131, 231) ist.

2. Rotierende Maschine (110, 210) nach Anspruch 1, wobei das Lagerschild (114, 214) die schnappende Verbindungseinheit (131, 231) aufweist und die schnappende Verbindungsvorrichtung (121, 221) eine Einrastkontur (141, 241) am zweiten Gehäuseabschnitt (115, 215) aufweist.

3. Rotierende Maschine (10) nach Anspruch 1, wobei die schnappende Verbindungsvorrichtung (21) eine Einrastkontur am Lagerschild (14, 114) aufweist und der Gehäuseabschnitt (15) die schnappende Verbindungseinheit (31) aufweist.

4. Rotierende Maschine (10, 110) nach einem der vorhergehenden Ansprüche, wobei an dem Gehäuseabschnitt (15, 114) mit der schnappenden Verbindungseinheit (31, 131) ein Schnapphaken (32, 132), insbesondere mit dem Gehäuseabschnitt (15, 114) mit der schnappenden Verbindungseinheit (31, 131) in einem Stück aus einem metallischen Werkstoff bestehend hergestellt, angebracht ist.

5. Rotierende Maschine (10, 110) nach Anspruch 4, wobei der Schnapphaken (32, 132) über ein Verbindungsstück (34) an dem Gehäuseabschnitt (15, 114) angebracht ist, das eine Verjüngung (33) im Materialquerschnitt in einer radialen Richtung (1) aufweist.

6. Rotierende Maschine (210) nach einem der vorhergehenden Ansprüche, wobei die schnappende Verbindungseinheit (221) ein Federelement (232) aufweist, das in einem eingeschnappten Zustand in der Einrastkontur (241) elastisch verformt ist.

7. Rotierende Maschine (10, 110, 210) nach einem der vorhergehenden Ansprüche, wobei die schnappende Verbindungseinheit (31, 131, 231) von der Drehachse (4) kommend in die Einrastkontur (41, 141, 241) eingeschnappt ist.

8. Rotierende Maschine (10, 110, 210) nach einem der vorhergehenden Ansprüche, wobei die schnappende Verbindungseinheit (21, 121, 221) nicht durch elastische Deformation der Gehäuseabschnitte (14, 15, 114, 115, 214, 215, 209) lösbar ist.

9. Rotierende Maschine (10, 110, 210) nach einem der vorhergehenden Ansprüche, wobei die Befestigungsvorrichtung (19, 119, 219) eine weitere Verbindungsvorrichtung (51, 251) aufweist, die eine formschlüssige Verbindungsvorrichtung (51, 251) zur Fixierung des ersten Gehäuseabschnitts (14, 214) und des zweiten Gehäuseabschnitts (15, 215) relativ zueinander gegen ein Verdrehen um die Drehachse (4) ist.

10. Rotierende Maschine (10, 110, 210) nach Anspruch 9, wobei die formschlüssige Verbindungsvorrichtung (51, 251) eine erste Verbindungseinheit (52) an dem ersten Gehäuseabschnitt (14, 114, 214) und eine dazu korrespondierende erste Verbindungseinheit (53) an dem zweiten Gehäuseabschnitt (15, 115, 215) zur Bildung einer formschlüssigen Verbindung durch Zusammenschieben des ersten Gehäuseabschnitts (14, 114, 214) und des zweiten Gehäuseabschnitts (15, 115, 215) entlang der Welle aufweist.

11. Rotierende Maschine (10,110,210) nach einem der vorhergehenden Ansprüche, wobei die rotierende Maschine (10, 110, 210) keine Öffnung für ein Betätigen der schnappenden Verbindungsvorrichtung (21, 121, 221) von außerhalb der rotierenden Maschine (10, 110, 210) aufweist.

12. Rotierende Maschine (10, 110, 210) nach einem der vorhergehenden Ansprüche, wobei zwischen dem ersten Gehäuseabschnitt (14, 114, 214) und dem zweiten Gehäuseabschnitt (15, 115, 215) eine Dichtung (30) angeordnet ist.

13. Rotierende Maschine (10, 110, 210) nach einem der vorhergehenden Ansprüche, wobei einer der Gehäuseabschnitte (14, 114, 115, 214, 209) ein Gussteil aus einem metallischen Werkstoff, insbesondere umfassend den zweiten Gehäuseabschnitt (15) und den weiteren Gehäuseabschnitt (15) oder bestehend aus dem Lagerschild (14, 114, 214, 209), ist, wobei an einem axialen Ende (42, 242) des Gehäuseabschnitts (15, 114, 214, 209) mit der schnappenden Verbindungseinheit (31, 131, 231) weitere zu der schnappenden Verbindungseinheit (31, 131, 231) baugleiche schnappende Verbindungseinheiten (35) vorhanden sind, wobei die schnappenden Verbindungseinheiten (31, 131, 231, 35) um die Drehachse (4) herum nebeneinander angeordnet sind.

14. Rotierende Maschine (110, 210) nach einem der vorhergehenden Ansprüche, wobei die rotierende Maschine (110, 210) eine elektrische Maschine ist.

15. Verwendung eines Gehäuseabschnitts (14, 15, 114, 115, 214, 215, 209) für eine rotierende Maschine (10, 110, 210) nach einem der vorhergehenden Ansprüche, die die Befestigungsvorrichtung (19, 119, 219, 289) mit der Verbindungsvorrichtung (21, 121, 221, 291) aufweist, wobei das Lagerschild (14, 114, 214, 209) durch die Befestigungsvorrichtung (19, 119, 219, 289) an dem zweiten Gehäuseabschnitt (15, 115, 215) befestigt ist, wobei die Verbindungsvorrichtung (21, 121, 221, 291) den Metallquerschnitt (13) zum Ausüben der axialen Presskraft (12, 112) zwischen dem Lagerschild (14, 114, 214, 209) und dem zweiten Gehäuseabschnitt (15, 115, 215) aufweist, wobei der Gehäuseabschnitt (14, 15, 114, 115, 214, 215, 209) als Lagerschild (14, 114, 214, 209) oder als zweiter Gehäuseabschnitt (15, 115, 215) für die schnappende Verbindungsvorrichtung (21, 121, 221, 291) der rotierenden Maschine verwendet wird, wobei die schnappende Verbindungsvorrichtung (21, 121, 221, 291) mit der schnappenden Verbindungseinheit (31, 131, 231) die Verbindungsvorrichtung (21, 121, 221, 291) der rotierenden Maschine (10, 110, 210) ist.
